# FASCICULE DE BREVET EUROPEEN

(11) **EP 3 357 751 B1**
(45) Date de publication et mention de la délivrance du brevet: **26.03.2025**
(21) Numéro de dépôt: 18153898.4
(22) Date de dépôt: 29.01.2018
(51) Int. Cl.: B60Q 1/00, F21S 45/49, F21S 45/43, F21V 29/67, H05K 7/20, H05K 7/12, H01L 23/40

(54) **MODULE OPTIQUE POUR VÉHICULE AUTOMOBILE ET VERROUILLAGE EN POSITION D'UN COMPOSANT DU MODULE PAR UN ÉLÉMENT D'ENSERREMENT ÉLASTIQUEMENT DÉFORMABLE**
OPTISCHES MODUL FÜR KRAFTFAHRZEUG, UND POSITIONSVERRIEGELUNG EINER KOMPONENTE DES MODULS MITHILFE EINES ELASTISCH VERFORMBAREN EINSPANNELEMENTS
OPTICAL MODULE FOR A MOTOR VEHICLE AND LOCKING IN POSITION OF A COMPONENT OF THE MODULE BY A RESILIENTLY DEFORMABLE LOCKING ELEMENT

(30) Priorité: 06.02.2017 FR 1750971
(43) Date de publication de la demande: 08.08.2018
(73) Titulaire: Valeo Vision, 93012 Bobigny Cedex (FR)
(72) Inventeur: MESTRE, Hugo, 93012 Bobigny Cedex (FR); NDIAYE, Ibrahima, 93012 Bobigny Cedex (FR); RUCKEBUSCH, Nicolas, 93012 Bobigny Cedex (FR)
(74) Mandataire: Valeo Visibility

(56) Documents cités:
- EP-A1- 3 043 107
- EP-A1- 3 104 061
- DE-A1- 102010 045 848
- DE-A1- 102013 017 022
- JP-A- 2007 194 172
- JP-A- 2010 129 316
- KR-A- 20160 034 682
- KR-U- 20160 000 297
- US-A- 4 427 249
- US-A1- 2003 002 258
- US-A1- 2003 024 688
- US-A1- 2004 027 807
- US-A1- 2005 078 228
- US-A1- 2008 174 958
- US-A1- 2015 349 446
- US-B1- 6 401 806

## Description

La présente invention concerne l'éclairage pour véhicule et les solutions d'assemblage pour monter de façon amovible des composants dans des projecteurs lumineux. L'invention concerne plus précisément, dans le domaine automobile, un module optique pourvu d'un composant fonctionnel amovible et l'utilisation d'une pièce d'enserrement pour fixer un tel composant dans un module optique.

Généralement, un tel module optique fonctionne avec une source lumineuse présentant l'inconvénient d'émettre de la chaleur. Il est donc équipé d'un ou plusieurs composants visant à absorber et/ou évacuer cette chaleur. Ce type de module est par exemple pourvu d'un radiateur pour maintenir la température du module à un niveau relativement bas et d'un composant de refroidissement, typiquement sous la forme d'un ventilateur. De cette manière, le fonctionnement du module optique n'est pas affecté par une température trop élevée.

Les composants fonctionnels ajoutés dans les modules optiques sont, le plus fréquemment, fixés par plusieurs vis, comme décrit par exemple dans le document WO2012/013591. Compte tenu des contraintes d'accès souvent difficiles à ces modules, les opérations de dévissage et revissage s'avèrent délicates lorsqu'il s'agit de remplacer un composant, par exemple un composant de refroidissement ou un autre composant susceptible d'être remplacé.

L'invention vise à obtenir un module optique, par exemple d'éclairage et/ou de signalisation, permettant de faciliter les opérations de rechanges d'un composant se montant de façon amovible.

A cet effet, l'invention concerne un module optique pour véhicule automobile, tel que défini dans la revendication 1 et comprenant :
- un support qui délimite un compartiment accessible par une ouverture,
- un composant fonctionnel étant un ventilateur, conçu et agencé pour être logé dans le compartiment dans une configuration opérationnelle du composant fonctionnel, par insertion au travers de l'ouverture suivant une direction générale d'introduction, laquelle direction peut permettre de rapprocher le composant vers un fond du compartiment opposé à ladite ouverture et typiquement d'engager le composant contre ce fond,
- un élément d'enserrement, distinct du support et pourvu de deux branches ; et
- au moins un relief d'engagement, fixe par rapport au support et préférentiellement formé directement sur le support, et sur lequel l'élément d'enserrement est maintenu en prise par un effet de rappel élastique de l'une au moins des deux branches, l'au moins un relief d'engagement permettant de clipper l'élément d'enserrement en le maintenant dans une position clippée adjacente au support,
avec la particularité que l'élément d'enserrement est conçu et agencé, lorsqu'il est clippé, pour retenir et verrouiller le composant fonctionnel dans la configuration opérationnelle, l'élément d'enserrement présentant une portion actionnable flexible pour écarter l'une des deux branches et permettre un déclippage dans une conformation écartée de l'élément d'enserrement, ce grâce à quoi le composant fonctionnel est extractible du compartiment.

Par ces dispositions, le module optique présente l'avantage d'être plus souple dans les opérations de maintenance, car le ventilateur peut venir se fixer de façon simple et rapide sur le support du module optique, et peut être retiré à tout moment de façon tout aussi aisée. L'élément d'enserrement se retire d'un seul tenant, ce qui est plus simple que de retirer plusieurs vis.

Dans une option préférée, l'élément d'enserrement est déformable par flexion de façon à pouvoir passer :
- d'une conformation de repos, dans laquelle les deux branches sont sensiblement parallèles,
- à la conformation écartée, dans laquelle les deux branches sont plus éloignées l'une par rapport à l'autre que dans la conformation de repos.

Selon une particularité, l'au moins un relief d'engagement comprend une projection formée sur un élément de paroi latérale du compartiment et qui présente un épaulement ou une surface de butée, de préférence formée en arrière du relief d'engagement par rapport à la direction générale d'introduction, pour retenir une branche associée de l'élément d'enserrement dans la position clippée.

Selon une particularité, l'au moins un relief d'engagement comprend une projection formée sur chacun des deux éléments de paroi latérale, parallèles à la direction d'introduction, qui délimitent le compartiment, chacune des projections présentant un épaulement ou une surface de butée, de préférence formée en arrière du relief d'engagement par rapport à la direction générale d'introduction, pour retenir une branche associée de l'élément d'enserrement dans la position clippée.

Selon l'invention, le support présente deux éléments de paroi latérale qui délimitent entre eux un espace de réception pour le composant fonctionnel, l'ouverture s'étendant transversalement entre les deux éléments de paroi latérale, l'au moins un relief d'engagement comprenant un premier relief saillant vers l'extérieur formé sur l'un des deux éléments de paroi latérale et un deuxième relief saillant vers l'extérieur formé sur l'autre des deux éléments de paroi latérale, ces deux reliefs faisant saillie radialement vers l'extérieur.

Chacune des deux branches de l'élément d'enserrement se termine par une portion pliée vers l'intérieur et est respectivement retenue par l'un des premier et deuxième reliefs dans la position clippée, par engagement de la portion pliée vers l'intérieur à l'arrière du relief correspondant.

Selon l'invention, l'élément d'enserrement présente :
- deux branches qui se répartissent de part et d'autre de l'ouverture du compartiment dans la position clippée, et
- une base intermédiaire reliant la première branche et la deuxième branche de façon à obturer ou s'étendre en vis-à-vis de l'ouverture dans la position clippée (le terme « obturer » est ici d'interprétation extensive et ne signifie pas forcément une obturation complète).

Selon une particularité, l'une au moins des deux branches présente une première portion, de préférence sensiblement droite, prolongée, du côté opposé à la base intermédiaire, par une portion de blocage qui se raccorde à la première portion en définissant, vers l'intérieur de l'élément d'enserrement, un angle déterminé inférieur ou égal à 120°, de préférence inférieur ou égal à 90°. Avec cette configuration, on peut former une portion de la branche qui présente une orientation vers l'intérieur sensiblement parallèle à la base intermédiaire, bien adaptée pour venir en pise contre un épaulement ou une surface de butée, formé sur une paroi latérale du compartiment.

Selon une particularité, la portion de blocage est une portion intermédiaire entre la première portion et une deuxième portion ayant une forme de C ou de J et définissant une extrémité libre de la branche.

Selon une particularité, la base intermédiaire de l'élément d'enserrement présente un changement de courbure et est arquée vers l'intérieur, de façon à définir une partie arquée vers l'intérieur.

Selon une particularité, la base intermédiaire est reliée à l'une et/ou à l'autre des deux branches par une cornière arrondie, la branche intermédiaire et/ou la cornière arrondie étant élastiquement déformables pour permettre d'écarter réversiblement la branche raccordée à la cornière.

Un module optique selon l'invention peut comporter l'une ou plusieurs des caractéristiques suivantes :
- la cornière présente un orifice de passage, ce grâce à quoi la cornière définit la portion actionnable flexible afin d'écarter la branche correspondante, l'écartement étant obtenu en réponse à l'introduction d'une extrémité d'un outil de démontage, tel qu'un tournevis, au travers de l'orifice de passage entre un élément de paroi latérale du compartiment et la branche (l'action locale au travers de l'orifice de passage, à l'encontre de l'effet de rappel, avec passage d'un outil entre une branche de l'élément d'enserrement et la paroi latérale, est bien adaptée pour écarter radialement vers l'extérieur la branche, grâce à la cornière).
- l'élément d'enserrement est actionnable par une poussée / pression exercée suivant la direction d'introduction pour obtenir l'écartement de l'une et/ou l'autre des deux branches puis la position clippée.
- l'élément d'enserrement présente deux cornières arrondies et, dans une section en coupe transversale de l'élément d'enserrement, la base intermédiaire présente une courbure inverse de celle des deux cornières arrondies.
- le module optique comporte une source de lumière placée dans une cavité optique au moins en partie délimitée par le support et des moyens optiques pour convertir en faisceau lumineux sortant un rayonnement d'une source de lumière.
- le ventilateur est distinct des moyens optiques et le compartiment est séparé de la cavité optique.
- l'élément d'enserrement est réalisé d'une pièce, de préférence métallique.
- le ventilateur est un composant de refroidissement,
- le composant fonctionnel comprend un circuit de commande en liaison avec tout ou partie de la source lumineuse.
- la source lumineuse comprend au moins une diode électroluminescente.
- le module optique comporte un support pourvu d'une partie en une seule pièce permettant de définir le compartiment.
- le module optique est pourvu d'un radiateur, de préférence réalisé en tôle pliée, avec de l'aluminium pur ayant une bonne conduction thermique, ce qui améliore la performance en matière de régulation de la température).
- le module optique présente une lentille définissant un axe optique et permettant de transmettre un faisceau sortant, la direction d'introduction étant sensiblement parallèle à l'axe optique.

Un autre objet de l'invention est de proposer un projecteur pour véhicule automobile, comprenant un boîtier de projecteur et un module optique selon l'invention afin de réaliser une fonction d'éclairage et/ou de signalisation.

Il est prévu d'utiliser, dans un module optique pour véhicule automobile, un élément d'enserrement, de préférence réalisé d'une seule pièce, afin de verrouiller un ventilateur dans une position de montage pour laquelle le ventilateur est fixement solidaire d'un support du module optique, sachant qu'il est permis, une fois que le ventilateur a été introduit suivant une direction générale d'introduction dans un compartiment de réception défini par le support, au travers d'une ouverture de ce compartiment :
- d'engager et clipper l'élément d'enserrement, distinct du support et pourvu de deux branches, contre au moins un relief d'engagement qui est fixe par rapport au support et préférentiellement formé directement sur le support, de façon que l'élément d'enserrement occupe une position adjacente au support pour verrouiller la position de montage et soit maintenu en prise contre le ou les reliefs d'engagement par un effet de rappel élastique de l'une au moins des deux branches,
- de déverrouiller la position de montage du ventilateur, par actionnement d'au moins une portion d'actionnement flexible formée dans l'élément d'enserrement afin d'écarter l'une au moins des deux branches et permettre un déclippage dans une conformation écartée de l'élément d'enserrement.

Il est également prévu selon des options d'utiliser l'élément d'enserrement pour verrouiller la position de montage d'un composant fonctionnel autre qu'un ventilateur, par exemple un circuit de commande ou une plaque à fonction d'éclairage. On comprend que l'élément d'enserrement peut permettre une introduction et un retrait du composant fonctionnel à la façon d'un tiroir.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en perspective montrant des parties d'un module optique selon un mode de réalisation préféré de l'invention, lors de l'introduction d'un composant fonctionnel dans un compartiment de réception du module optique ;
- la figure 2 est une vue en perspective éclatée, renversée par rapport à celle de la figure 1, montrant le compartiment de réception formé dans une partie de support appartenant au module, avant l'introduction du composant fonctionnel ;
- la figure 3 une vue en perspective illustrant les même éléments que ceux montrés sur la figure 2, dans un état d'assemblage avec le composant verrouillé dans le compartiment de réception ;
- la figure 4 est une vue de dessus illustrant l'introduction du composant fonctionnel avant son verrouillage par l'élément d'enserrement ;
- la figure 5 est vue en perspective montrant une configuration superposée dans le module optique, entre un échangeur de chaleur et un ventilateur monté de manière amovible conformément à un mode de réalisation de l'invention, pendant une phase de déclippage de l'élément d'enserrement.

Sur les différentes figures, les mêmes références désignent des éléments identiques ou similaires.

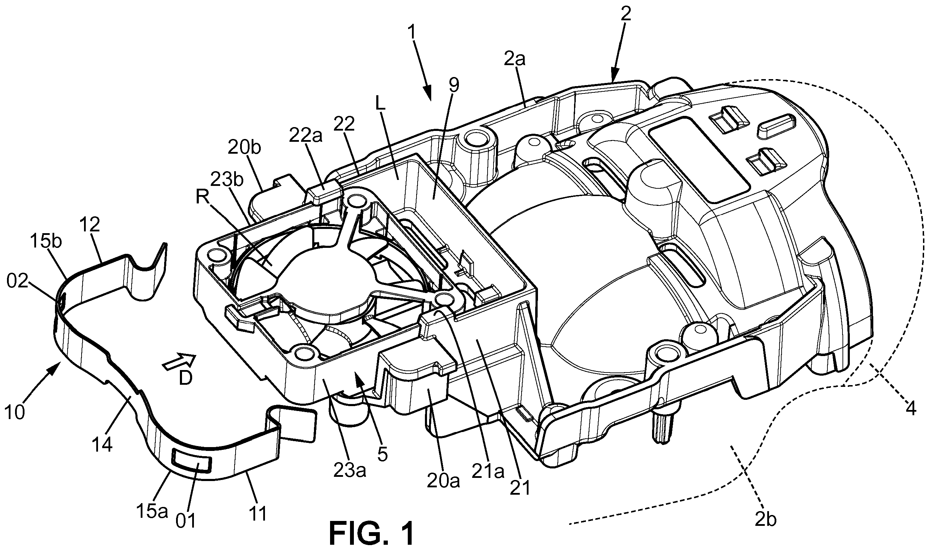

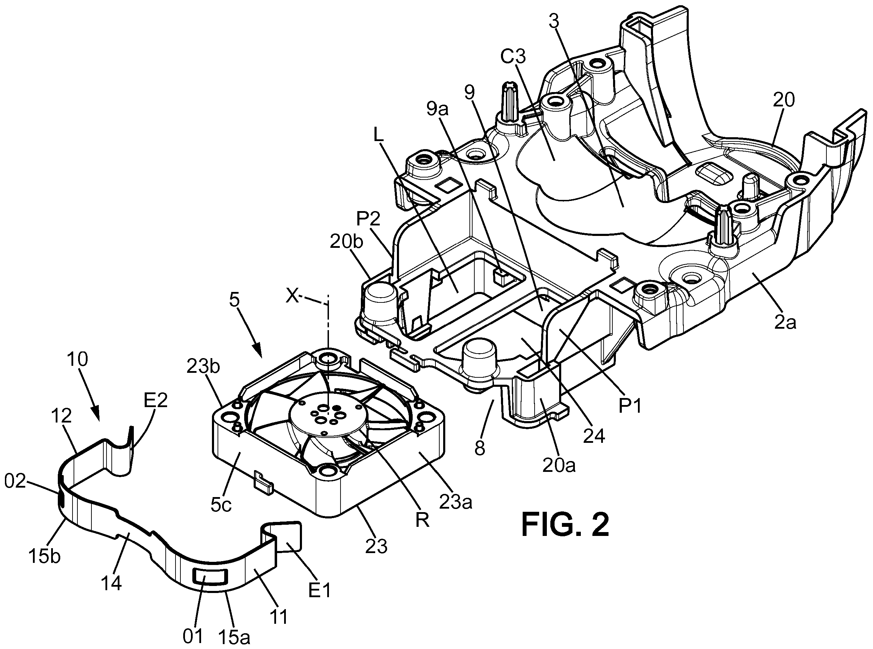

En référence aux figures 1 et 2, le module optique 1 permet par exemple de réaliser une fonction d'éclairage et/ou de signalisation vers l'extérieur d'un véhicule automobile. Pour cela, le module 1 comporte de façon connue en soi un support 2, une source lumineuse (non représentée), des moyens réflecteurs incluant une surface fixe de réflexion 3 formée dans le support 2 et d'autres éléments optionnels de façonnage du faisceau optique et une lentille optique 4 formée à une extrémité de sortie du module 1. Le support 2 peut présenter deux parties 2a, 2b complémentaires, ce qui peut faciliter le montage avec un maintien de la lentille optique 4 entre ces deux parties 2a, 2b et/ou faciliter le montage préalable de la source lumineuse et de certaines parties réfléchissantes sur une des deux parties 2a, 2b.

Dans certaines options, le support 2 peut être du genre décrit dans le document WO2012/013591. Par souci de concision, il ne sera donc pas décrit la façon dont la source lumineuse, des réflecteurs peuvent être montés et associés au support 2, ni illustré le mode de fixation d'une plieuse ou autre élément réflecteur similaire prévu pour dévier et diaphragmer le faisceau.

En arrière de la lentille optique 4, de préférence du côté d'une extrémité arrière du module optique 1 opposée à l'extrémité avant, il est prévu aussi un composant fonctionnel monté de façon amovible, ici un ventilateur 5, ainsi qu'un échangeur thermique 6, comme par exemple un radiateur pourvu d'une ou plusieurs surfaces dissipatrices de chaleur 36. Le support 2 comprend des moyens 20 pour positionner et pour fixer la lentille optique 4 sur le support 2. Ces moyens coopèrent avec des moyens de positionnement et de fixation prévus sur la lentille optique 3. La lentille optique 4 est ainsi supportée par le support 4. De préférence, la lentille optique 4 est supportée directement par le support 2.

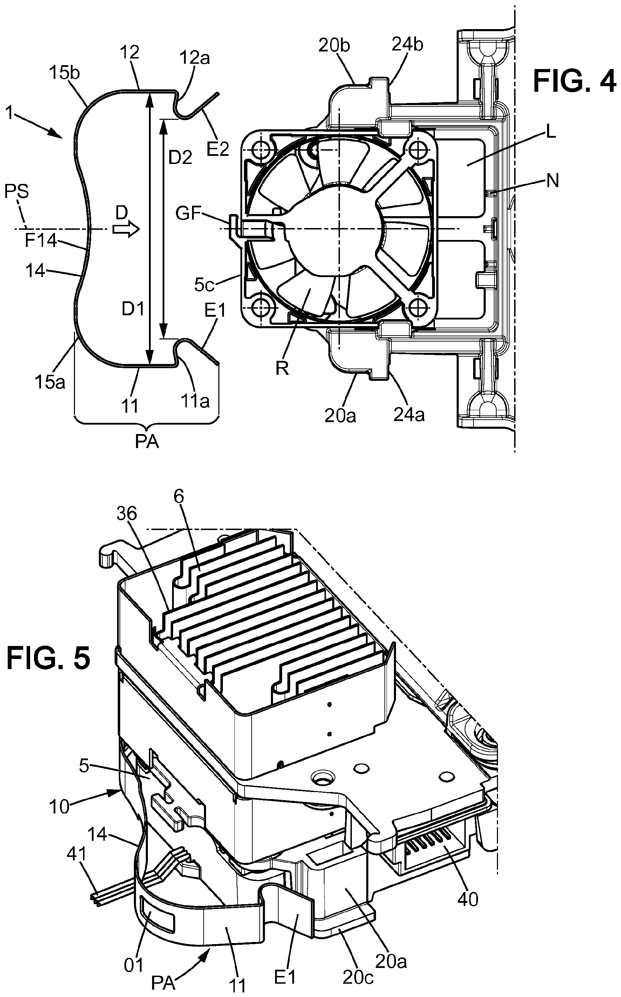

En référence à la figure 5, le support 2 peut comporter ou supporter un ensemble de raccordement pour positionner et pour fixer l'échangeur thermique 6 sur le support 2, de sorte que l'échangeur thermique 6 est rendu solidaire du support 2 dans un état monté. De préférence, le ventilateur 5 et l'échangeur thermique 6 sont alignés suivant une direction perpendiculaire à l'axe optique du module 1 et superposés l'un à l'autre, de façon à co-agir pour faire baisser efficacement la température du module optique 1. En particulier, le ventilateur 5 produit un flux d'air envoyé sur la ou les surfaces dissipatrices de chaleur 36 prévues dans le module optique 1.

Sur les figures 1 et 2 notamment, on peut voir que le support 2 définit un compartiment L prévu pour la réception du ventilateur 5. Ce compartiment L présente un fond 9 opposé à une ouverture 8 par laquelle le ventilateur 5, ici de format sensiblement parallélépipédique, peut être introduit. Le côté de l'ouverture 8 forme ainsi une entrée du compartiment L. Bien entendu, le format du ventilateur 5 peut être modifié, par exemple avec un format davantage circulaire ou arrondi, ou en étant polygonal avec plus de quatre côtés, ou une combinaison mixant un format polygonal et une ou plusieurs faces courbées. Dans de telles variantes, le compartiment L peut aussi présenter une correspondance de forme avec les délimitations externes du ventilateur 5, tout en permettant une introduction par coulissement.

En référence à la figure 5, un connecteur électrique 40 peut être optionnellement prévu à proximité du ventilateur 5, par exemple sur un côté latéral distinct du côté de l'ouverture 8. Le ventilateur 5 peut présenter une liaison d'alimentation 41 se raccordant sur une face arrière 5c du ventilateur 5, formée par le stator 23 et orientée du côté de l'ouverture 8.

Dans le module optique 1, une source de lumière peut être placée dans une cavité optique C3 ou émettre un rayonnement dans une telle cavité optique C3, au moins en partie délimitée par le support 2. Des moyens optiques d'un genre connu en soi, prévus dans la cavité C3, permettent par exemple de convertir en faisceau lumineux sortant le rayonnement de la source de lumière. Le compartiment L est séparé d'une telle cavité optique C3.

Le compartiment L montré sur les figures 1 et 2 est délimité entre deux éléments 21, 22 parallèles, appelés dans ce qui suit éléments 21, 22 de parois latérale, qui rejoignent une paroi transversale qui définit le fond 9. Afin de ne pas entraver la circulation d'air suivant une direction parallèle à l'axe de rotation X d'un rotor R à ailettes du ventilateur 5, les faces principales opposées (formant typiquement le dessous et le dessus) du compartiment L peuvent être ajourés. Le châssis formant le stator 23 du ventilateur 5 peut définir un cadre entourant le rotor R, avec quatre faces externes dont deux faces externes latérales 23a, 23b qui sont adaptées pour permettre le guidage du ventilateur 5, par coopération avec des surfaces intérieures correspondantes formées dans les éléments 21, 22 de paroi latérale.

En référence à la figure 1, une ou deux pattes de guidage 21a, 22a peuvent faire saillie vers l'intérieur par rapport aux surfaces intérieures des éléments 21, 22 de paroi latérale, ici du côté du dessus, pour guider et maintenir le ventilateur 5 plaqué contre une paroi ajourée de dessous du compartiment L. De telles pattes 21a, 22a peuvent se substituer à une paroi de dessus, ce qui permet à l'air d'entrer dans le compartiment L par la totalité de la face de dessus du compartiment. Une disposition similaire peut être adoptée pour la face de dessous délimitant le compartiment L.

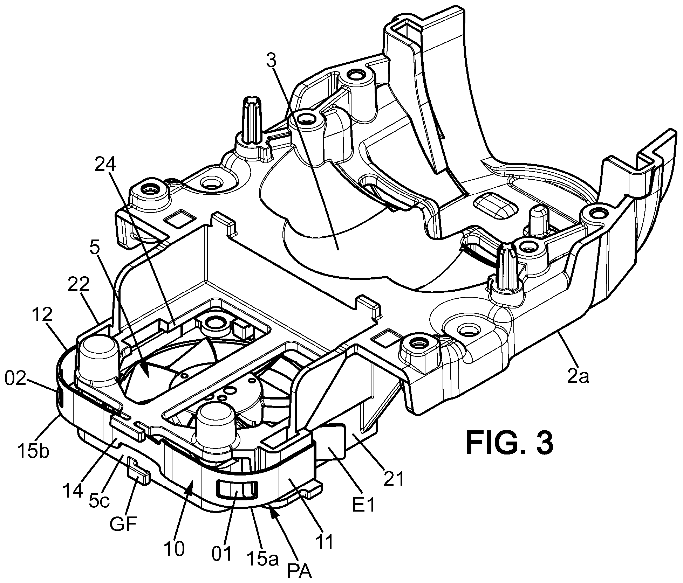

Comme bien visible sur les figures 2 et 3, la paroi de dessous peut présenter plusieurs larges ouvertures de passage 24 pour l'air mis en mouvement par le rotor R du ventilateur 5. Du côté de l'ouverture 8, il n'y a pas d'obstacle à l'introduction du ventilateur 5 lorsque celui-ci est orienté de façon à ce que son axe de rotation X soit parallèle aux éléments 21, 22 de paroi latérale et perpendiculaire à une direction d'introduction D prédéfinie. Toutefois, un système détrompeur peut être optionnellement prévu pour autoriser la réception du ventilateur 5 seulement si celui-ci présente une forme complémentaire à un organe spécifique prévu dans le compartiment L et, éventuellement, seulement si le ventilateur 5 est tourné dans un sens particulier avec toujours la même face orientée du côté du dessus du compartiment L.

A titre d'exemple non limitatif, un organe de guidage 9a peut être prévu du côté du fond 9 pour indexer en translation la fin du mouvement d'insertion du ventilateur 5 dans le compartiment L, et aussi pour former un détrompeur lorsque l'on souhaite que le ventilateur 5 présente une orientation bien définie.

Dans l'exemple illustré, le ventilateur 5 est un composant fonctionnel monté sur une partie 2a du support 2 par insertion au travers de l'ouverture 8 suivant une direction d'introduction D, en l'approchant du fond 9 jusqu'à éventuellement venir en butée sur ce fond 9. Cette direction d'introduction D peut être droite comme dans l'exemple illustré sur la figure 1. Cependant, dans des variantes, le composant fonctionnel à insérer peut être introduit avec des modifications de direction et/ou un jeu de déplacement défini relatif, par exemple par translation dans deux directions spatiales perpendiculaires l'une par rapport à l'autre et par rapport à la direction d'introduction D.

L'engagement du ventilateur 5 est illustré ici seulement à titre d'exemple, et il doit être compris que le mode d'insertion du ventilateur 5 qui est décrit est un cas spécifique. Il en va de même pour le mode de verrouillage qui va être décrit ci-après.

En référence aux figures 2, 3 et 4, le module optique 1 comporte un élément d'enserrement 10 formé typiquement par une pièce séparable du support 2, ici une pièce métallique élastiquement déformable de faible épaisseur. L'élément d'enserrement 10 a par exemple une épaisseur inférieure ou égale à 2 mm, au moins dans les zones de flexion de cet élément. Comme bien visible sur la figure 4, l'élément d'enserrement 10 présente deux branches 11, 12 qui peuvent être symétriques l'une par rapport à l'autre. Un plan de symétrie PS de l'élément d'enserrement 10 sépare deux moitiés qui peuvent être identiques. On peut ainsi utiliser l'élément d'enserrement 10 sans risque de se tromper de position, contrairement à une disposition aves des branches dissymétriques.

Lors du montage, le ventilateur 5 peut être retenu par friction, par exemple par utilisation de nervures internes N, lorsqu'il est complètement inséré dans le compartiment L suivant la direction d'introduction D. Plus généralement, s'il existe un jeu de déplacement relatif par rotation et/ou par translation au début de l'introduction dans le compartiment L, un tel jeu peut être avantageusement réduit lors de l'amenée ultérieure du ventilateur 5 (ou autre composant/module fonctionnel) vers le fond 9, par exemple de manière croissante jusqu'à ce que le jeu de déplacement relatif par translation et/ou par rotation disparaisse ou soit réduit à un jeu de déplacement résiduel relatif minimal, au plus tard lorsque la position de fonctionnement est atteinte.

Le cas échéant, la liaison d'alimentation 41 peut être engagée dans une gorge définie par le guide GF formé du côté d'une face du stator 23 qui définit une face arrière selon la direction d'introduction D. Ce guidage peut permettre de placer la liaison d'alimentation 41 dans une position abaissée ou remontée qui évite toute interférence avec l'approche et la venue en prise de l'élément d'enserrement 10 pour venir recouvrir l'ouverture 8.

En référence à la figure 4, la première branche 11 et la deuxième branche 12 présentent chacune une extrémité libre E1, E2 ayant, grâce à une ou plusieurs zones flexibles, un certain débattement dans une direction radiale perpendiculaire au plan de symétrie PS. Chacune des deux branches 11, 12 se termine ici par une portion (11a, E1 ; 12a, E2 ;) pliée vers l'intérieur afin d'exercer une fonction de retenue, par engagement sur des reliefs saillants 20a, 20b d'engagement correspondants prévus sur les éléments 21, 22 de paroi latérale. Chaque relief d'engagement 20a, 20b, formé par exemple directement sur le support 2, peut présenter une face arrière 24a, 24b, résultant par exemple d'un épaulement dans l'élément 21, 22 de paroi latérale.

La distance D2 minimale entre les branches 11, 12 est mesurée, ici perpendiculairement au plan de symétrie PS, entre les portions pliées vers l'intérieur. La distance maximale D1 entre les branches 11, 12, mesurée suivant la même direction, peut correspondre à la distance entre deux premières portions, ici rectilignes et parallèles entre elles, qui sont directement raccordées aux cornières 15a, 15b. Ces distances D1 et D2 sont bien entendues celles mesurées dans la conformation au repos, non écartée, de l'élément d'enserrement 10. La relation suivante peut être satisfaite : 9 mm < D1 - D2 < 35 mm.

Comme bien visible sur la figure 3, après avoir monté le ventilateur 5, l'élément d'enserrement 10 peut être retenu par les deux reliefs d'engagement 20a, 20b, et maintenu en prise par un effet de rappel élastique, ici par chacune des deux branches 11, 12. L'élément d'enserrement 10 présente une base intermédiaire 14 entre les branches 11, 12, destinée à venir contre la face arrière 5c du ventilateur 5 dans une position fonctionnelle montée et verrouillée du ventilateur 5 dans le compartiment L. Dans cet exemple non limitatif, la base intermédiaire 14 est reliée à l'une et à l'autre des deux branches 11, 12 par une cornière 15a, 15b arrondie, élastiquement déformable pour permettre un effet de charnière autour d'un axe perpendiculaire à la direction d'introduction D. La base intermédiaire 14 s'étend transversalement au plan PS. Dans certaines variantes, cette base intermédiaire 14 peut être plus courte voire supprimée, par exemple si la face arrière 5c est significativement plus étroite que la largeur du ventilateur 5 ou bombée ou si elle présente des chanfreins suivant une direction transversale au plan PS.

Dans le cas illustré, l'effet de charnière est réalisé autour d'un axe parallèle à l'axe de rotation X et permet d'ouvrir plus largement l'élément d'enserrement 10. Autrement dit, on peut obtenir entre les portions pliées vers l'intérieur une distance minimale d'écartement entre les branches 11, 12 qui est significativement augmentée, par exemple augmentée au moins de (D1-D2)/2, pour un distance mesurée ici encore perpendiculairement au plan de symétrie PS ou plan médian comparable.

Sur la figure 4, on voit bien que la distance D2 est trop courte pour permettre à l'élément d'enserrement 10 de venir dans la position de verrouillage visible sur la figure 3, de sorte que la mise en place de l'élément d'enserrement 10 nécessite une déformation des deux branches 11, 12. Afin de faciliter cette mise en place, les extrémités libres E1, E2 sont formées en biais pour définir des rampes obliques, qui s'écartent du plan PS depuis la zone de pliage où la distance minimale D2 est définie. Cette configuration permet d'écarter progressivement les branches 11, 12, chaque rampe jouant le rôle d'un suiveur de came lors du contact contre une surface axiale fixe (analogue à une surface de came) définie par le relief 20a, 20b en vis-à-vis. L'écartement est permis par une déformation des cornières 15a, 15b et/ou de la base intermédiaire 14, ce qui permet de convertir l'avancée de chaque rampe suivant la direction d'introduction en un mouvement de rotation/écartement vers l'extérieur des branches 11, 12.

Sur les figures 1 à 3, on peut voir que la base intermédiaire 14 peut être rétrécie en largeur, au moins en partie, par rapport aux cornières 15, 15b, ce qui augmente la flexibilité dans cette zone de l'élément d'enserrement 10 et facilite l'obtention d'un écartement significatif entre les branches 11, 12.

La portion pliée 11a, E1 d'une première branche 11 et la portion pliée 12a, E2 de la deuxième branche 12 peuvent glisser par contact contre le relief correspondant 20a, 20b, dans une conformation écartée de l'élément d'enserrement 10. Au moins une patte 20c de guidage longitudinal peut être prévue en position adjacente du relief 20a, 20b ou dans une portion de marge de ce relief 20a, 20b. Une telle patte 20c est ici saillante et prévue sur chacun des reliefs opposés 20a, 20b, afin d'empêcher ou limiter un jeu relatif en rotation de l'élément d'enserrement 10 lorsque l'une et/ou d'autre des branches 11, 12 sont écartées. Ceci permet de centrer l'élément d'enserrement 10 par rapport à l'ouverture 8 à obturer et conserver une position centrée de son plan de symétrie PS, ou plan médian similaire, de telle sorte que ce plan PS reste parallèle à l'axe de rotation X du ventilateur 5 dans le cas illustré.

Les deux branches 11, 12 sont décrites ici comme étant parallèles entre elles dans une conformation de repos et plus éloignées l'une par rapport à l'autre dans la conformation écartée. Plus généralement, les branches 11, 12, parallèles ou non parallèles entre elles au repos, peuvent avantageusement présenter la même capacité à passer d'une position de repos qui permet de réaliser un enserrement, avec un blocage axial du côté des extrémités des branches 11, 12, à une position plus écartée qui autorise un déplacement axial suivant la direction d'introduction D et en sens inverse.

Le glissement de l'élément d'enserrement 10, de part et d'autre du compartiment L s'arrête dès que les portions pliées des branches 11, 12 ont dépassé le relief correspondant 20a, 20b. Par un effet ressort, les cornières 15a, 15b reprennent alors leur forme initiale et ces portions pliées 11a, E1 et 12a, E2 s'engagent à l'arrière des reliefs 20a, 20b, contre les faces 24a, 24b. De cette façon, l'élément d'enserrement 10 obture alors l'ouverture 8 et on obtient un verrouillage de la position fonctionnelle du ventilateur 5, monté dans le compartiment L. Par exemple, on peut retrouver la conformation initiale de l'élément d'enserrement, dans laquelle la distance minimale D2 entre les branches 11, 12 est la même que dans la figure 4. On comprend que le verrouillage peut résulter d'un déplacement essentiellement linéaire de l'élément d'enserrement 10, ce dernier pouvant être poussé seulement au niveau de sa partie ou base intermédiaire 14, par exemple sur une face légèrement concave F14 de cette base intermédiaire 14, orientée en sens opposé par rapport à la direction d'introduction D comme illustré sur les figures 1 et 4.

Dans l'exemple non limitatif illustré, chaque portion pliée vers l'intérieur d'une branche 11 ou 12, inclut un tronçon radial de blocage 11a, 12a transverse par rapport au plan PS de symétrie de l'élément d'enserrement 10. Un tel tronçon radial 11a, 11b vient en prise contre une face arrière 24a, 24b du relief 20a, 20b à la fin de la mise en place de l'élément d'enserrement 10, dans une position clippée de cet élément d'enserrement 10. La forme générale de U de cet élément d'enserrement 10 permet une retenue au plus près du support 2, en longeant trois côtés latéraux du compartiment L.

Comme bien visible sur la figure 4, chaque tronçon radial de blocage 11a, 12a s'étend de façon intermédiaire entre la première portion, ici rectiligne, de la branche considérée et l'extrémité libre E1 ou E2 de la branche définie sous la forme d'une deuxième portion ayant une forme de C ou de J. La première portion de chaque branche, formant la portion la plus proche de la cornière 15a, 15b, peut être parallèle au plan de symétrie PS et est typiquement orientée suivant la direction d'introduction D lorsque l'élément d'enserrement 10 est en approche et en passe de s'engager extérieurement contre les parois latérales 21, 22 du compartiment L.

L'élément d'enserrement 10, de préférence métallique, est par exemple réalisé d'une pièce. Il présente une mémoire de forme et a une réversibilité suffisante pour que les distances D1 et D2 restent sensiblement les mêmes après plusieurs opérations de déformation pour obtenir une conformation écartée de l'élément d'enserrement 10. Bien entendu, on peut prévoir que seulement une partie de l'élément d'enserrement 10 soit métallique, par exemple l'une et/ou l'autre des branches 11, 12 avec la cornière associée 15a, 15b.

L'opération de déverrouillage va à présent être décrite plus en détail en référence aux figures 1, 3 et 5.

En référence à la figure 3 notamment, on peut voir que chaque cornière 15a, 15b présente un orifice de passage O1, O2 qui débouche dans une zone de contact entre un élément de paroi 21, 22 et la première portion, ici rectiligne, d'une des branches 11, 12. L'orifice de passage O1, O2 est orienté et accessible du même côté que la base intermédiaire 14, c'est-à-dire par l'arrière. Cependant, l'orifice de passage O1, O2 peut être formé dans une zone d'angle, de façon à pouvoir modifier l'orientation d'une partie droite de travail d'un outil de démontage qui est insérée au travers de cet orifice O1, O2. Cela peut permettre en particulier un débattement latéral, allant de la base intermédiaire 14 vers la branche 11, 12 la plus proche ou dans l'autre sens. Pour cela, l'orifice de passage O1, O2 peut être typiquement allongé dans une direction d'éloignement par rapport à la base intermédiaire 14.

L'orifice de passage O1 permet à l'ensemble constitué par la cornière 15a et la branche associée 11 de définir une portion actionnable flexible PA, laquelle peut s'écarter du plan PS pendant la mise en place de l'élément d'enserrement 10. Plus précisément, l'introduction d'une extrémité d'un outil de démontage, tel qu'un tournevis, au travers de l'orifice de passage O1 et entre l'élément 21 de paroi latérale et la branche 11, permet d'écarter radialement vers l'extérieur la branche 11. Ceci a pour effet de déclipper l'élément d'enserrement 10 comme bien visible sur la figure 5, la portion pliée 11a, E1 correspondante pouvant se désengager du relief 20a formé latéralement sur le support 2.

Bien entendu, on peut aussi prévoir un autre orifice de passage O2, permettant à l'ensemble constitué par la cornière 15b et la branche associée 12 de définir une autre portion actionnable flexible. On comprend que l'introduction d'une extrémité d'un outil de démontage, tel qu'un tournevis, au travers de l'orifice de passage O2 et entre l'élément 22 de paroi latérale et la branche 12, permet d'écarter radialement vers l'extérieur la branche 12. Comme pour le cas précédemment décrit où l'on utilise l'orifice de passage O1, ceci a pour effet de déclipper l'élément d'enserrement 10 par un désengagement du relief correspondant 20b formé extérieurement sur l'élément de paroi latérale 22.

En référence à la figure 5, il est permis de déformer et déclipper l'élément d'enserrement 10 sans mouvements fastidieux de vissage, par un simple effet de levier exercé par l'intermédiaire d'un outil conventionnel, typiquement un tournevis à tête plate. En passant par une conformation écartée, l'élément d'enserrement 10 déformé est déclippé au moins d'un côté et on obtient un déverrouillage.

Après un retrait complet de l'élément d'enserrement 10, le ventilateur 5 peut être sorti du compartiment L, par une simple traction en sens opposé à la direction d'introduction D. Dans sa position fonctionnelle, le ventilateur 5 peut optionnellement dépasser par rapport aux éléments 21, 22 de paroi latérale du côté de l'ouverture 8, pour faciliter la préhension d'une extrémité arrière du ventilateur 5 lors d'une opération de retrait.

Le module optique 1 peut faire partie d'un projecteur pour véhicule automobile, par exemple en étant logé dans un boîtier de projecteur, afin de réaliser au moins une fonction d'éclairage et/ou de signalisation.

Un des avantages du module 1 est de permettre d'assembler et désassembler le module optique 1 de façon aisée, et de manière compatible avec des lieux d'implantations difficiles d'accès, par exemple par l'arrière du projecteur dans un véhicule. Un tel module optique 1 facilite le remplacement d'un composant fonctionnel susceptible d'être changé.

La conception de l'élément d'enserrement 10 avec une forme générale de U, sans recouvrement des faces principales du compartiment L, permet de ne pas dégrader les performances de refroidissement, dans le cas du verrouillage en position d'un ventilateur 5. Une lame métallique peut constituer l'élément d'enserrement 10 et produire un effet de ressort qui facilite la venue en prise à l'arrière des reliefs 20a, 20b lors du verrouillage.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que les figures illustrent une forme symétrique de l'élément d'enserrement 10 qui correspond à une option préférée, cet élément d'enserrement 10 peut présenter une branche différente ou plus courte que l'autre. De même, une des branches 11, 12 peut le cas échéant ne pas s'engager sur l'arrière d'un relief 20a, 20b en s'écartant pour le déclippage, mais coopérer de façon différente pour permettre le maintien en position de l'élément d'enserrement 10. Le cas échéant, une telle branche peut être maintenue dans une position fixe par attachement magnétique, friction ou coopération de forme, optionnellement en étant guidée en position le long de la paroi latérale du compartiment L.

## Revendications

1. Module optique (1) pour véhicule automobile, comprenant:
- un support (2) qui délimite un compartiment (L) accessible par une ouverture (8),
- un composant fonctionnel conçu et agencé pour être logé dans un espace de réception du compartiment (L) dans une configuration opérationnelle du composant fonctionnel, par insertion au travers de l'ouverture (8) suivant une direction générale d'introduction (D), le composant fonctionnel étant un ventilateur (5) comprenant un axe de rotation (X) d'un rotor (R) à ailettes et un châssis formant le stator (23) du ventilateur,
- un élément d'enserrement (10) pourvu de deux branches (11, 12) et conçu et agencé, lorsqu'il est clippé, pour retenir et verrouiller le ventilateur (5) dans la configuration opérationnelle, les deux branches (11, 12) se répartissant de part et d'autre de l'ouverture (8) du compartiment (L) dans la position clippée,
- une source lumineuse,
**caractérisé en ce qu'**il comporte au moins un relief d'engagement (20a, 20b), fixe par rapport au support (2) et préférentiellement formé directement sur le support, et sur lequel l'élément d'enserrement (10) est maintenu en prise par un effet de rappel élastique de l'une au moins des deux branches (11, 12), ledit au moins relief d'engagement (20a, 20b) permettant de clipper l'élément d'enserrement (10) en le maintenant dans une position clippée adjacente au support (2),
**en ce que** l'élément d'enserrement (10) est distinct du support (2),
**en ce que** le module optique (1) comporte un ensemble de réflexion défini par plusieurs éléments réflecteurs, la source lumineuse étant placée en regard d'un élément réflecteur (3) de l'ensemble de réflexion qui est formé par une partie dudit support (2),
**en ce que** le support (2) présente deux éléments (21, 22) de paroi latérale qui délimitent entre eux l'espace de réception pour le ventilateur, l'ouverture (8) s'étendant transversalement entre les deux éléments (21, 22) de paroi latérale, de manière à permettre l'introduction du ventilateur (5) lorsque celui-ci est orienté de façon à ce que son axe de rotation (X) soit parallèle aux éléments (21, 22) de paroi latérale et perpendiculaire à la direction générale d'introduction (D), ledit au moins un relief d'engagement (20a, 20b) comprenant un premier relief (20a) saillant vers l'extérieur formé sur l'un des deux éléments de paroi latérale (21) et un deuxième relief (20b) saillant vers l'extérieur formé sur l'autre des deux éléments de paroi latérale (22), ces deux reliefs faisant saillie radialement vers l'extérieur, chacune des deux branches (11, 12) de l'élément d'enserrement (10) se terminant par une portion pliée vers l'intérieur et étant respectivement retenue par l'un des premier et deuxième reliefs (20a, 20b) dans la position clippée, par engagement de la portion pliée vers l'intérieur à l'arrière du relief correspondant,
**en ce que** l'élément d'enserrement (10) présente une base intermédiaire (14) reliant la première branche (1) et la deuxième branche (12) de façon à obturer ou s'étendre en vis-à-vis de l'ouverture (8) dans la position clippée,
**et en ce que** l'élément d'enserrement (10) présente une portion actionnable flexible (PA) pour écarter l'une des deux branches (11, 12) et permettre un déclippage dans une conformation écartée de l'élément d'enserrement (10).

2. Module selon la revendication 1, dans lequel l'élément d'enserrement (10) est déformable par flexion de façon à pouvoir passer :
- d'une conformation de repos, dans laquelle les deux branches (11, 12) sont sensiblement parallèles,
- à ladite conformation écartée, dans laquelle les deux branches (11, 12) sont plus éloignées l'une par rapport à l'autre que dans la conformation de repos.

3. Module selon la revendication 1 ou 2, dans lequel la base intermédiaire (14) est reliée à l'une et/ou à l'autre des deux branches (11, 12) par une cornière (15a, 15b) arrondie, la branche intermédiaire et/ou la cornière arrondie (15a, 15b) étant élastiquement déformables pour permettre d'écarter réversiblement la branche (11, 12) à laquelle la cornière est raccordée.

4. Module selon la revendication 3, dans lequel la cornière (15a, 15b) présente un orifice de passage (O1, O2), ce grâce à quoi la cornière (15a, 15b) et la branche adjacente définissent ladite portion actionnable flexible (PA) afin d'écarter la branche correspondante (11, 12), l'écartement étant obtenu en réponse à l'introduction d'une extrémité d'un outil de démontage, tel qu'un tournevis, au travers de l'orifice de passage (O1, O2) entre un élément (21, 22) de paroi latérale du compartiment (L) et la branche.

5. Module selon l'une quelconque des revendications précédentes, comprenant une source de lumière placée dans une cavité optique (C3) au moins en partie délimitée par le support (2) et des moyens optiques pour convertir en faisceau lumineux sortant un rayonnement d'une source de lumière, le ventilateur étant distinct des moyens optiques et le compartiment (L) étant séparé de la cavité optique (C3).

6. Module selon l'une quelconque des revendications précédentes, dans lequel l'élément d'enserrement (10) est réalisé d'une pièce, de préférence métallique.

7. Projecteur pour véhicule automobile, comprenant un boîtier de projecteur et un module optique (1) selon l'une quelconque des revendications précédentes afin de réaliser une fonction d'éclairage et/ou de signalisation.

## Patentansprüche

1. Optisches Modul (1) für ein Kraftfahrzeug, umfassend:
- einen Träger (2), der ein Fach (L) begrenzt, das über eine Öffnung (8) zugänglich ist,
- eine funktionale Komponente, die dazu ausgebildet und eingerichtet ist, in einer Betriebskonfiguration der funktionalen Komponente durch Einsetzen durch die Öffnung (8) hindurch entlang einer allgemeinen Einführungsrichtung (D) in einem Aufnahmeraum des Faches (L) aufgenommen zu werden, wobei die funktionale Komponente ein Lüfter (5) ist, der eine Drehachse (X) eines Rotors (R) mit Flügeln und einen Rahmen, der den Stator (23) des Lüfters bildet, umfasst,
- ein Einspannelement (10), das mit zwei Schenkeln (11, 12) versehen ist und dazu ausgebildet und eingerichtet ist, wenn es aufgeklipst ist, den Lüfter (5) in der Betriebskonfiguration zu halten und zu verriegeln, wobei die zwei Schenkel (11, 12) in der aufgeklipsten Position beiderseits der Öffnung (8) des Faches (L) angeordnet sind,
- eine Lichtquelle,
**dadurch gekennzeichnet, dass** es mindestens eine Einrasterhebung (20a, 20b) aufweist, die ortsfest bezüglich des Trägers (2) und vorzugsweise direkt am Träger ausgebildet ist und auf der das Einspannelement (10) durch eine elastische Rückstellwirkung mindestens eines der zwei Schenkel (11, 12) in Eingriff gehalten wird, wobei die mindestens eine Einrasterhebung (20a, 20b) ermöglicht, das Einspannelement (10) aufzuklipsen und dabei in einer dem Träger (2) benachbarten aufgeklipsten Position zu halten,
dadurch, dass das Einspannelement (10) vom Träger (2) verschieden ist,
dadurch, dass das optische Modul (1) eine Reflexionsanordnung aufweist, die durch mehrere Reflektorelemente definiert ist, wobei die Lichtquelle gegenüber einem Reflektorelement (3) der Reflexionsanordnung angeordnet ist, das von einem Teil des Trägers (2) gebildet wird,
dadurch, dass der Träger (2) zwei Seitenwandelemente (21, 22) aufweist, die zwischen sich den Aufnahmeraum für den Lüfter begrenzen, wobei sich die Öffnung (8) quer zwischen den Seitenwandelementen (21, 22) erstreckt, um so das Einführen des Lüfters (5) zu ermöglichen, wenn dieser derart ausgerichtet ist, dass seine Drehachse (X) parallel zu den Seitenwandelementen (21, 22) und senkrecht zur allgemeinen Einführungsrichtung (D) ist, wobei die mindestens eine Einrasterhebung (20a, 20b) eine nach außen vorstehende erste Erhebung (20a), die an einem der zwei Seitenwandelemente (21) ausgebildet ist, und eine nach außen vorstehende zweite Erhebung (20b), die an dem anderen der zwei Seitenwandelemente (22) ausgebildet ist, umfasst, wobei diese zwei Erhebungen radial nach außen vorstehen, wobei jeder der zwei Schenkel (11, 12) des Einspannelements (10) in einem Abschnitt endet, der nach innen gebogen ist und jeweils von einer von der ersten und der zweiten Erhebung (20a, 20b) durch Einrasten des nach innen gebogenen Abschnitts hinter der entsprechenden Erhebung in der aufgeklipsten Position gehalten wird,
dadurch, dass das Einspannelement (10) eine Zwischenbasis (14) aufweist, die den ersten Schenkel (1) und den zweiten Schenkel (12) so verbindet, dass sie in der aufgeklipsten Position die Öffnung (8) verschließt oder sich gegenüber dieser erstreckt,
und dadurch, dass das Einspannelement (10) einen flexiblen betätigbaren Abschnitt (PA) aufweist, um einen der zwei Schenkel (11, 12) abzuspreizen und ein Ausklipsen des Einspannelements (10) in einer gespreizten Form zu ermöglichen.

2. Modul nach Anspruch 1, wobei das Einspannelement (10) durch Biegen so verformbar ist, dass es übergehen kann:
- aus einer Ruheform, in der die zwei Schenkel (11, 12) im Wesentlichen parallel sind,
- in die gespreizte Form, in der die zwei Schenkel (11, 12) weiter voneinander entfernt sind als in der Ruheform.

3. Modul nach Anspruch 1 oder 2, wobei die Zwischenbasis (14) mit dem einen und/oder dem anderen der zwei Schenkel (11, 12) durch ein gerundetes Winkelstück (15a, 15b) verbunden ist, wobei das Zwischenstück und/oder das gerundete Winkelstück (15a, 15b) elastisch verformbar sind, um zu ermöglichen, den Schenkel (11, 12), an den das Winkelstück angeschlossen ist, reversibel abzuspreizen.

4. Modul nach Anspruch 3, wobei das Winkelstück (15a, 15b) ein Durchgangsloch (01, 02) aufweist, wodurch das Winkelstück (15a, 15b) und der benachbarte Schenkel den flexiblen betätigbaren Abschnitt (PA) definieren, um den entsprechenden Schenkel (11, 12) abzuspreizen, wobei das Abspreizen in Reaktion auf die Einführung eines Endes eines Demontagewerkzeugs, wie etwa eines Schraubendrehers, durch das Durchgangsloch (01, 02) hindurch zwischen ein Seitenwandelement (21, 22) des Faches (L) und den Schenkel erzielt wird.

5. Modul nach einem der vorhergehenden Ansprüche, welches eine Lichtquelle umfasst, die in einem optischen Hohlraum (C3) angeordnet ist, der wenigstens teilweise von dem Träger (2) und optischen Mitteln zum Umwandeln einer Strahlung einer Lichtquelle in ein austretendes Lichtbündel begrenzt wird, wobei der Lüfter von den optischen Mitteln verschieden ist und das Fach (L) von dem optischen Hohlraum (C3) getrennt ist.

6. Modul nach einem der vorhergehenden Ansprüche, wobei das Einspannelement (10) aus einem Stück, vorzugsweise aus Metall, hergestellt ist.

7. Scheinwerfer für ein Kraftfahrzeug, welcher ein Scheinwerfergehäuse und ein optisches Modul (1) nach einem der vorhergehenden Ansprüche umfasst, um eine Beleuchtungs- und/oder Signalisierungsfunktion auszuführen.

## Claims

1. Automotive vehicle optical module (1), comprising:
- a support (2), which delimits a compartment (L) that is accessible through an opening (8),
- a functional component, which is designed and arranged so as to be housed in a receiving space of the compartment (L), when the functional component is in an operational configuration, by being inserted through the opening (8) in a general direction of insertion (D), the functional component being a fan (5) comprising an axis of rotation (X) of a vane rotor (R) and a frame forming the stator (23) of the fan,
- a clamping element (10), which is provided with two arms (11, 12) and designed and arranged, when it is clipped on, so as to retain and lock the fan (5) in the operational configuration, the two arms (11, 12) being distributed on either side of the opening (8) of the compartment (L) in the clipped-on position,
- a light source,
**characterized in that** it has at least one engaging protrusion (20a, 20b), which is fixed with respect to the support (2) and preferably formed directly on the support, and on which the clamping element (10) is held in engagement by an elastic return effect of at least one of the two arms (11, 12), said at least one engaging protrusion (20a, 20b) enabling the clamping element (10) to be clipped on by holding the latter in a clipped-on position adjacent to the support (2),
**in that** the clamping element (10) is separate from the support (2),
**in that** the optical module (1) has a reflection assembly defined by a plurality of reflector elements, the light source being placed opposite a reflector element (3) of the reflection assembly that is formed by a part of said support (2),
**in that** the support (2) has two side-wall elements (21, 22), which delimit the receiving space for the fan between them, the opening (8) extending transversely between the two side-wall elements (21, 22), so as to allow the fan (5) to be inserted when it is oriented so that its axis of rotation (X) is parallel to the side-wall elements (21, 22) and perpendicular to the general direction of insertion (D), said at least one engaging protrusion (20a, 20b) comprising a first outwardly projecting protrusion (20a) formed on one of the two side-wall elements (21) and a second outwardly projecting protrusion (20b) formed on the other of the two side-wall elements (22), these two protrusions projecting radially outwardly, each of the two arms (11, 12) of the clamping element (10) terminating in an inwardly bent portion and being retained in the clipped-on position by one of the first and second protrusions (20a, 20b), respectively, by way of the inwardly bent portion engaging behind the corresponding protrusion,
**in that** the clamping element (10) has an intermediate base (14) connecting the first arm (1) and the second arm (12) so as to block or extend facing the opening (8) in the clipped-on position,
and **in that** the clamping element (10) has a flexible actuatable portion (PA) for moving one of the two arms (11, 12) outwards and for enabling the clamping element (10) to be unclipped when it is in an outwardly-moved configuration.

2. Module according to Claim 1, wherein the clamping element (10) is flexurally deformable so as to be able to pass:
- from a rest configuration, in which the two arms (11, 12) are substantially parallel,
- to said outwardly-moved configuration, in which the two arms (11, 12) are further apart from one another than in the rest configuration.

3. Module according to Claim 1 or 2, wherein the intermediate base (14) is connected to one and/or to the other of the two arms (11, 12) by a rounded corner (15a, 15b), the intermediate arm and/or the rounded corner (15a, 15b) being elastically deformable in order to enable the arm (11, 12) to which the corner is connected to be reversibly moved outwards.

4. Module according to Claim 3, wherein the corner (15a, 15b) has a through-hole (01, 02), by virtue of which the corner (15a, 15b) and the adjacent arm define said flexible actuatable portion (PA) so as to move the corresponding arm (11, 12) outwards, the outwards movement being performed in response to an end of a disassembly tool, such as a screwdriver, being inserted through the through-hole (01, 02) between a side-wall element (21, 22) of the compartment (L) and the arm.

5. Module according to any one of the preceding claims, comprising a light source placed in an optical cavity (C3) at least partially delimited by the support (2) and optical means for converting radiation from a light source into an outgoing light beam, the fan being separate from the optical means and the compartment (L) being separated from the optical cavity (C3).

6. Module according to any one of the preceding claims, wherein the clamping element (10) is produced as a single part, preferably made from metal.

7. Automotive vehicle headlight, comprising a headlight housing and an optical module (1) according to any one of the preceding claims in order to perform a lighting and/or signalling function.
